# EUROPEAN PATENT SPECIFICATION

(11) **EP 0 617 673 B1**
(45) Date of publication and mention of the grant of the patent: **28.08.1996**
(21) Application number: 93924248.3
(22) Date of filing: 18.10.1993
(51) Int. Cl.: B60K 31/00, B60K 41/20

(54) **PROCESS AND ARRANGEMENT FOR ENGINE VEHICLE CRUISE CONTROL**
VERFAHREN UND EINRICHTUNG ZUR FAHRZEUGGESCHWINDIGKEITSREGELUNG
PROCEDE ET SYSTEME DE REGULATION DE LA VITESSE D'UN VEHICULE AUTOMOBILE

(30) Priority: 26.10.1992 SE 9203163
(43) Date of publication of application: 05.10.1994
(73) Proprietor: SCANIA CV AKTIEBOLAG, S-151 87 Södertälje (SE)
(72) Inventor: HEDSTRÖM, Lars-Gunnar, S-610 70 Vagnhärad (SE)
(74) Representative: Waldebäck, Hans Olov
(86) International application number: SE9300851
(87) International publication number: WO9410002

(56) References cited:
- EP-A- 0 241 872
- US-A- 4 462 479
- US-A- 4 477 124

## Description

This invention relates to a process and an arrangement for vehicle cruise control in accordance with the statements made in the preamble to patent claim 1 and patent claim 6 respectively.

### State of the art

A process of prior art involves the use of a retarder for braking a vehicle to a constant speed when driven downhill. Patent SE 460 781 (= EP,A,336 913) describes such a system in which the retarder control system is designed with a cruise control function which, when activated, brakes the vehicle so that it is driven at a constant speed. The cruise control function must be reactivated on every descent where the driver wants the cruise control function to be activated. For the retarder control systems of modern vehicles are designed so that it is not possible to drive the vehicle with the retarder engaged whilst the driver has his foot on the accelerator in addition to the idle throttle. When the vehicle reaches a flat section of road or an uphill section after the descent the driver must accelerate, thereby automatically disengaging the cruise control function.

Modern vehicles also have control systems for engine regulation which normally also include a function for keeping the speed of the vehicle constant by means of engine control. This cruise control function is therefore designed mainly for driving on flat roads and uphill, where the driving resistance of the vehicle is so great that the accelerator must be pressed to maintain the speed of the vehicle. This type of cruise control is therefore based on the fact that the engine is adjusted by a suitable throttle to maintain a constant vehicle speed. With only this type of regulation the vehicle speed will increase to a value exceeding the speed setpoint determined by the cruise control when the vehicle encounters a descent of sufficient gradient on which the engine braking function is insufficient to maintain the speed.

Where the vehicle is equipped with both these types of cruise control functions, retarder and engine control, it is important that they do not counteract each other. For this reason the cruise control function is automatically disengaged by means of the engine control system when the cruise control function is activated by means of the retarder control system. Otherwise there is a risk that the engine control system may adjust the engine to full throttle whilst the retarder system simultaneously adjusts the retarder to maximum braking.

### Objective of the invention

The objective of this invention is to provide a system for controlling the cruise control functions of a vehicle making optimum use of the engine control system and the retarder control system. One objective is therefore to ensure that there is no risk of the systems counteracting each other. A further objective is to reduce the need for renewed driver activation of the cruise control function. In addition the invention must be simple and cheap to produce and use, and it must also be possible for existing vehicles equipped with arrangements for cruise control to be modified, according to the conditions described, so that the invention can be utilised.
One further objective is to guarantee a simple, user-friendly control system which provides safe, economical propulsion of the engine vehicle.

### Brief description of the invention

This is achieved according to the invention on the basis of the features indicated in the characterising parts of claims 1 and 6.

The process and arrangement according to the invention enables both systems for cruise control to be activated simultaneously when driving downhill without any risk that the systems will counteract each other. At the bottom of the hill the engine control system automatically takes over the cruise control function without the driver having to reactivate any of the controls. This applies provided that the cruise control function of the retarder is engaged when the engine acceleration is low. On the other hand, if the retarder is engaged during throttle from the engine control system, the cruise control function of the engine control system is disengaged to prevent the systems from counteracting each other.

The attached sub-claims indicate advantageous designs of a process and arrangement according to the invention, further details of their advantages being given in the description below. The description relates to an embodiment of the invention and is given with reference to the attached drawings.

### Brief description of the drawings

- Figure 1: is an explanatory diagram showing the construction of an arrangement for cruise control according to the invention,
- Figure 2: shows a flow chart of how a process for cruise control takes place, and
- Figure 3: shows a flow chart according to Figure 2, with an alternative condition.

### Description of an exemplary embodiment

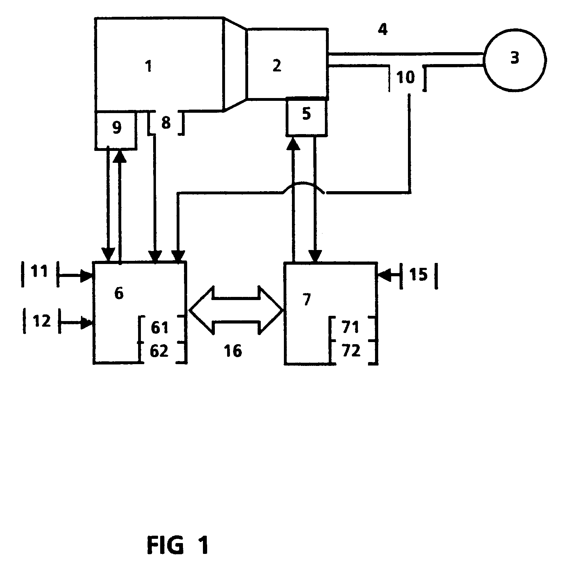

In principle Figure 1 shows a drive system with a transmission for a vehicle. This relates mainly to a heavier vehicle such as a truck or bus, engine 1 being preferably a diesel engine. The drive system therefore incorporates, conventionally, an engine 1 and a gearbox 2 connected to it by driving power. The driving power is transmitted from gearbox 2 to the driving wheels 3 of the vehicle via a cardan shaft 4. A retarder 5 which, when activated, can be used as an auxiliary brake, is connected to gearbox 2. In this embodiment retarder 5 is of the hydraulic type, but alternatively it may be of an electrical type, e.g. an eddy current brake, or another known type. In the following the braking moment influencing the vehicle will be described as a braking moment obtained from retarder 5. The braking effect from retarder 5 can be suitably regulated in different effect stages, depending on the braking effect required. In addition to retarder 5, other additional brakes can be activated, such as an exhaust brake (not shown). Such an exhaust brake may be suitably coordinated with a retarder function so that when the retarder function initiates active control the exhaust brake, as the first primary braking effect stage, can come into operation before the braking effect stage of the preferably hydrodynamic retarder is eventually engaged. Alternatively the exhaust brake can be actuated secondarily after all the braking effect stages in the hydrodynamic retarder have been activated and when increased braking effect is still sought. The following description only mentions the retarder, but the invention is not limited merely to the selective actuation of a retarder but also includes other additional brakes which can contribute braking effect. By additional brakes are meant brakes supplementary to the ordinary friction brakes of the vehicle for the wheels, which should be saved wherever possible to avoid overheating, with the consequent loss of braking effect which must be available for emergency situations. In the description the retarder is therefore used to exemplify both a separate auxiliary brake and a number of auxiliary brakes which interact with each other.

Engine 1 is controlled under the influence of an engine control unit 6 and retarder 5 is controlled under the influence of a retarder control unit 7. Both these control units 6, 7 are suitably of the electrical type which are arranged to regulate engine throttle and the braking effect of the retarder system, respectively, depending on input signals representing different engine parameters, vehicle parameters, and controls actuated manually by the driver. Both control units each incorporate a microprocessor (CPU 61, 71 and a memory 62, 72 for execution of the processes described later on in the description.

Engine control unit 6 is therefore connected, among other things, to a sensor 8 on engine 1 for sensing the engine speed, and a sensor in fuel injection system 9 of the engine, to allow direct sensing of the engine driving moments transmitted. In addition engine control unit 6 is connected to external sensors, of which only a vehicle speed sensor 10, an accelerator pedal sensor 11 and a control 12 actuated manually by the driver, for a cruise control function, are shown in the figure. Engine control unit 6 is also connected to different engine control mechanisms, such as fuel injection system 9, for regulating the same for controlling engine 1, and for sensing the injecgted fuel flow rate, i.e. the engine driving moment transmitted.

The cruise control function of engine control unit 6 is therefore intended to cause engine control unit 6 to regulate engine 1 to a speed equivalent to the vehicle speed required by the driver, depending on the setting selected by the driver by means of control 12. The required vehicle speed is stored as a setpoint Vₑₛₑₜₚ. Alternatively control 12 may be designed so that when control 12 has been actuated it stores the speed reached thereby as a setpoint Vₑₛₑₜₚ. The control is achieved principally by regulating fuel injection system 9 of the engine. Engine control systems of this type are already on the market in the form of SCANIA's EDC system, (Electronic Diesel Control).

Retarder control unit 7 is correspondingly connected to control mechanism 15 for activating a cruise control function of retarder 5. In the same way as engine control unit 6 retarder control unit 7 is able to store a speed setpoint V_{rsetp.} in memory 72 of retarder control unit 7. This setpoint V_{rsetp.} can be conventionally and automatically set to the instantaneous vehicle speed when the driver activates the cruise control function of retarder control unit 7 by means of control 15 designed for this purpose. Alternatively the driver may be provided with programmable controls for determining different speed setpoints which can be selectively chosen by the driver. When two different control systems for engine 1 and retarder 5 are used, the different speed setpoints consist of speed setpoints B_{msetp.} and V_{rsetp.}, respectively, individually intended for each control system.

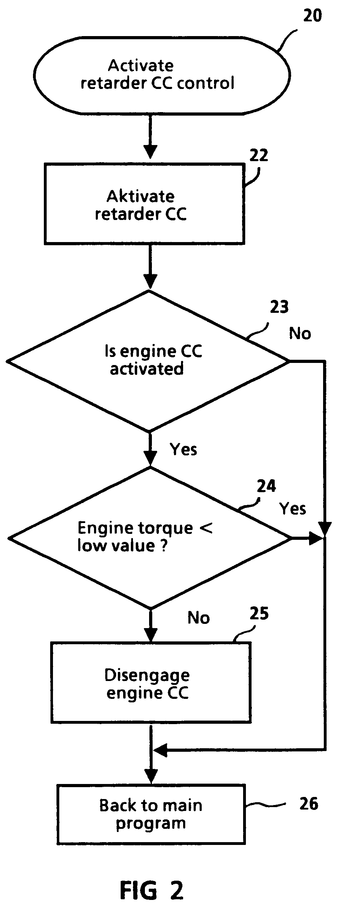

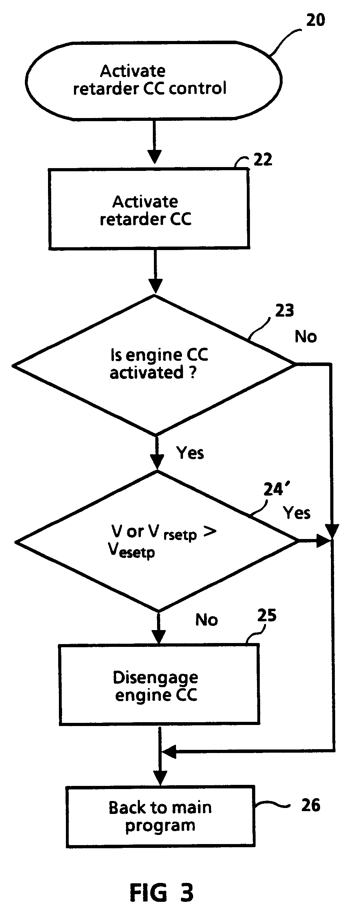

Retarder control unit 7 is suitably constructed by the method described in greater detail in SE 460781 mentioned in the preamble. The respective control units 7, 6 of retarder 5 and engine 1 are also connected to each other, and information on different parameters is transmitted directly between them. The fact that control units 6, 7 communicate with each other in this way is denoted in Figure 1 by means of a bidirectional arrow 16. Retarder control unit 7 therefore receives information via engine control unit 6 on the engine torque, accelerator position and other parameters. Both control units are also connected to each other so that they can exchange information on whether each other's cruise control functions are activated or not, so that they can influence each other according to the detailed description given below. In Figures 2 and 3 the designation CC is used for the respective cruise control functions and derives from the English term cruise-control.

Figure 2 shows, in the form of a flow chart, how both control units 6, 7 interact with each other under different driving conditions, and above all how their respective cruise control functions interact. The process described in Figure 2 presupposes that at least one of control systems 6, 7, but normally both, is (are) based on microcomputer technology. In an alternative design, however, it is possible to arrange a separate microcomputer-based control system capable of influencing engine 1 and retarder 5 in a similar manner. In this embodiment both systems 6, 7 are of the microcomputer type and the program which controls the process is stored in memory 72 in retarder control unit 7, and is processed in its microprocessor 71. The program is designed as a sub-program to a main program stored in control unit 7, which normally controls the retarder. The sub-program, which is shown in Figure 2, starts when the driver activates control 15 for the cruise control function of the retarder. Control 15 can either be designed with a button or the like which can be activated by the driver, or can be designed as a control mechanism with step-by-step adjustment for obtaining different braking moments, as described in SE 460781.

The activation of control 15 therefore constitutes a first starting stage 20, and gives rise in a second stage 22 to activation of the cruise control function of retarder 5. This means that control unit 7 of retarder 5 will regulate the braking function of the retarder so that the vehicle does not exceed the adjustedt speed setpoint V_{rsetp.} The function is activated by the driver mainly when driving downhill.

In a third stage 23 it is sensed whether the cruise control function of engine control unit 6 is activated or not. If it is not, the program returns directly to a main program in a final stage 26, and the control process continues according to the conditions stored in it. On the other hand, if the cruise control function of engine control unit 6 is activated, the engine torque is sensed in a fourth stage 24. If the engine torque drops below a certain predetermined, low value, the program returns to the main program. Thus the cruise control functions of both control units will be activated simultaneously. The predetermined torque value has been selected in this embodiment at 5% of the maximum torque of engine 1, and corresponds essentially to the torque generated by the engine during or close to idling. In other engines this idling torque may be equal to a higher or lower percentage of the maximum engine torque. If, however, the engine torque is equal to or exceeds the predetermined value, the cruise control function of engine 1 is disengaged in a fifth stage 25. On the other hand, the cruise control function of retarder 5 remains activated. In the final stage 26 the program then returns to the main program, but in this case with only the cruise control system of the retarder activated. It is therefore the comparison made in the fourth stage 24 which determines whether the cruise control function of engine control unit 6 is to remain activated or not on return to the main program.

This process therefore eliminates the risk that the cruise control system of engine 1 may counteract the cruise control function of retarder 5.

If it is assumed that the vehicle is being driven on a flat, horizontal road, the driver may have activated the cruise control function of engine control unit 6 by a method of prior art. In this case the engine is controlled automatically with increasing throttle if the speed if the vehicle begins to drop below the adjusted speed setpoint V_{esetp.} Manual accelerator pedal control by the driver can only give increased throttle in this operating condition, in addition to the throttle required for maintaining the speed setpoint, but does not disengage the cruise control function of engine control unit 6. When the vehicle reaches an uphill slope engine control unit 6 ensures that more fuel is injected into engine 1 so that the vehicle is able to maintain the adjusted speed setpoint. When the vehicle has passed the crest of the hill there is a corresponding reduction in the injected fuel flow rate. If the road continues with a downward slope the injected fuel flow rate will be reduced, and if the hill is sufficiently long or steep, engine 1 soon assumes an idling position and begins to engine brake. If this braking is not sufficient the driver can activate the cruise control function of retarder 5, whereupon a much higher braking effect is obtained which ensures that the speed of the vehicle remains the same. In this position the cruise control function of retarder 5 has been engaged at a low engine throttle torque, which means that the cruise control function of engine 1 can remain activated.

When the vehicle has passed the bottom of the downhill slope and if the road continues on a flat, horizontal level, or if another uphill slope is encountered, the braking effect of retarder 5 will gradually be reduced and will finally be completely inactivated. In this position the cruise control function of engine control unit 6 automatically takes over and adapts the injected fuel flow rate to that required to propel the vehicle at the previously adjusted speed setpoint.

Thus the driver need not activate the cruise control function of engine control unit 6 again. Whilst the engine is being adjusted to a speed above the idling speed by increased fuel injection, the cruise control function of retarder control unit 7 will be automatically disengaged.

The fact that the cruise control function of retarder 7 is disengaged in this manner means that on the next downhill slope the driver must again reactivate the same if he so wishes. It should in fact be possible to allow this function to remain in an activated position and to be automatically engaged on the next downhill slope. This would therefore enable the vehicle to be driven at a constant speed on uphill and downhill slopes, and on a flat, horizontal road, where both cruise control functions cancel each other out. However, this is not desirable from the point of view of road safety or for economic operation of the vehicle. In order to give the driver better control over the vehicle it is instead desirable for the cruise control function of retarder control unit 7 always to be disengaged during throttle, either manually by means of the accelerator, disengaged with the clutch pedal of the vehicle, or automatically as soon as the cruise control function of engine control unit 6 is engaged with active torque throttle.
Otherwise, if a latent braking effect begins at any time as soon as the speed exceeds a certain value, there is a risk that the vehicle may skid where the road surface is poor, and particularly when it is slippery. This is disastrous for heavy truck trains which sometimes have trailers, and where skidding may be very difficult to stop.
During driving on main roads, in moderate traffic and where the downhill slopes are short or gentle, exceeding the speed setpoint V_{esetp.} may be permitted momentarily without putting road safety at risk. If a braking moment were to be automatically increased with moderate speed increases, or where the road suddenly changes to an uphill slope, this will have negative effects on operating economy due to increased fuel consumption, and consequently higher emissions.

The design of the invention can be modified so that it is able to control on the basis of other engine or vehicle parameters sensed directly or indirectly.

Figure 3 shows a flow chart of a process according to a modified design. What distinguishes this from the design shown and described with reference to Figure 2 is the criterion used in a comparison to indicate whether the cruise control function of engine control unit 6 is to be automatically disengaged or not. The initial stages 20-23 are therefore the same as before, which is why the same reference designations are used in the figure from the start up to and including the third stage. In the fourth stage 24 ', however, there is no selection based on the engine torque. Instead the speed V of the vehicle is used as a parameter for the comparison and continued selection.
After retarder 5 has been activated, in the second stage 22, the speed V of the vehicle is representative of the speed setpoint V_{rsetp.} to which retarder 5 is adjusted. If speed V of the vehicle exceeds setpoint V_{esetp.} to which the cruise control function of engine control unit 6 is set, this means that retarder 5, which is now regulating, uses a speed setpoint V_{rsetp..} which is higher than speed setpoint V_{esetp.} of engine control unit 6. In such a situation there is no risk that the engine control system would begin to regulate at the same time as the retarder control system. It is therefore possible, in such a case, to allow both cruise control functions to be activated at the same time, since only the constant speed of retarder 5 is being regulated. This is shown in Figure 3 in the form of a loop past the fifth stage 25, which is the same as the fifth stage 25 shown in Figure 2, according to which the cruise control function of engine control unit 6 is automatically disengaged. On the other hand, if the above-mentioned speed conditions are not met, this means that retarder 5 has been activated by the driver at a speed which is below the speed which engine control unit 6 is endeavouring to maintain, i.e. the adjusted setpoint V_{esetp.} of engine control unit 6. In such a case the cruise control function of engine control unit 6 must be disengaged to prevent it from counteracting the function of retarder 5. A retarder manually engaged by the driver whilst engine control unit 6 is regulating the throttle indicates that the driver considers that the speed setpoint V_{esetp.} , towards which engine control unit 6 is regulating, is too high. Engine control unit 6 must therefore be automatically disengaged to enable the driver to determine a new speed setpoint V_{esetp.} for engine control unit 6 if the cruise control function of engine control unit 6 is required. This is shown in Figure 3 in that the cruise control function of engine control unit 6 is automatically disengaged in the fifth stage 25. The program then returns to the initial position 20 and the different criteria in the flow chart are tested again on renewed activation of control 15 of the retarder control unit.

Alternatively the speed setpoint V_{rsetp.} of retarder control unit 7 can be used in the fourth comparative stage 24 ', instead of the speed of the vehicle, as a basis of comparison, and this is also shown in the fourth stage 24' in Figure 3. The above description relates mainly to how the cruise control functions interact. In addition they can also be used conventionally and individually without influencing each other. Similarly, they can be disengaged manually by the driver if he so chooses. The cruise control function of the engine will be disengaged when the ordinary brakes of the vehicle are activated. Both cruise control functions can also be disengaged by activating controls specially designed for this purpose. The systems therefore also provide the possibility of conventional use of these functions. In alternative designs the cruise control functions can be obtained by means of other cruise control systems which control the engine and auxiliary brake of the vehicle by other means.

In conjunction with automatic and semi-automatic gear changing systems in which either hydraulic automatic gearboxes or electronically controlled mechanical gearboxes are used, the gear changing systems can intervene and spontaneously influence the engine control system to facilitate the gear change. Such an influence may in some cases give rise to a reduction in torque, reduced fuel flow rate or an increase in the torque or speed, increased fuel flow rate, in order to facilitate the disengagement or engagement of gears and adjust the engine to a synchronous speed. Where the engine torque or injected fuel flow rate is used as a basis for comparing the influence of the cruise control functions, as shown in Figure 2, the modification of the fuel flow rate brought about by the gear change must not be used in this respect as a basis for comparison. Instead the fuel flow rate required immediately before the gear change process is initiated, and after the gear change process is completed, is used here together with the fuel flow rate required after completion of the process. Alternatively a fuel flow rate value not modified by the gear change process can be used during the changing of gears.

## Claims

1. Process for keeping constant the speed of a vehicle in which an engine control unit (6) is arranged to control the driving engine (1) of the vehicle, and in which a retarder control unit (7) is arranged to control a retarder (5) connected to the transmission of the vehicle, where the engine control (6) and the retarder control (7) each incorporates a cruise control function which, by regulation of the engine (1) and the retarder (5)respectively, endeavours to maintain a constant vehicle speed when they are activated,
**characterised** in that when the cruise control function of the retarder control unit (7) is activated, whilst the cruise control function of the engine control unit (6) has been activated previously, an operating parameter for the vehicle is sensed and compared with a predetermined value, and it is determined on the basis of the comparison whether the cruise control function of the engine control unit (6) is to be disengaged or not.

2. Process for keeping a constant speed according to claim 1, **characterised** in that the sensed operating parameter represents the driving torque of the engine (1), and in that the cruise control function of the engine control unit remains in an activated position if the sensed parameter is below the predetermined position.

3. Process for keeping a constant speed according to claim 1, **characterised** in that the sensed operating parameter represents a speed.

4. Process for keeping a constant speed according to claim 2, **characterised** in that the predetermined value represents a torque corresponding to that generated by the engine (1) during idling.

5. Process according to claim 1 for activating two cruise control systems (6, 7), in which the first cruise control system (6) is designed to ensure, by controlling the engine throttle, that the speed of the vehicle does not drop below a determined speed setpoint, and in which the second cruise control system (7) is designed, by adjusting the braking effect in an additional brake (5) in the drive line of the vehicle, to ensure that the speed of the vehicle does not exceed a determined speed setpoint, where the first and second cruise control system (6, 7) respectively can be activated selectively so that simultaneous activation is possible, **characterised** in that when the second cruise control system (7) is activated, whilst the first system (6) is simultaneously activated, the first cruise control system (6) is maintained in the active condition only if its degree of adjustment is below a first predetermined value, and when the first cruise control system (6) begins to control the engine effect, corresponding to a degree of adjustment above a second predetermined value, the second cruise control system (7) is deactivated.

6. Vehicle cruise control arrangement, comprising an engine control unit (6) for regulating the driving engine (1) of the vehicle, and a retarder control unit (7) for regulating a retarder (5) connected to the transmission of the vehicle, in which the engine control unit (6) and the retarder control unit (7) each incorporates a cruise control function which, by controlling the engine (1) and the retarder (5)respectively, endeavours to maintain a constant vehicle speed, **characterised** in that the engine control unit (6) and/or the retarder control unit (7) is (are) designed to allow the cruise control function of the engine control unit (6) to be activated simultaneously as the cruise control function of the retarder control unit (7) only when the engine control unit (6) adjusts the engine (1) to a level which is below a predetermined level.

7. Vehicle cruise control arrangement according to claim 6, **characterised** in that the predetermined level constitutes a level representing a torque generated by the engine (1).

8. Vehicle cruise control arrangement according to claim 6, **characterised** in that the predetermined level constitutes a value representing a speed.

9. Vehicle cruise control arrangement according to claim 7, **characterised** in that the predetermined value corresponds to the torque which the engine (1) generates during idling and/or corresponds to a torque equivalent to 5 per cent of the maximum engine torque which can be generated.

10. Arrangement according to claim 6 for activating two cruise control systems (6, 7) for engine vehicles, comprising a driving engine (1) for driving the wheels (3) of the vehicle, together with additional brakes (5) for braking the wheels of the vehicle, in which the first cruise control system (6) is designed to ensure, by controlling the engine throttle, that the speed of the vehicle does not drop below a speed setpoint determined by the driver by means of a programming control (12) in a memory (62), and in which the second cruise control system (7) is designed to ensure, by controlling the braking effect in additional brakes (5) in the drive line of the vehicle, that the speed of the vehicle does not exceed a speed setpoint determined by the driver by means of a programming control (15) in a memory (72), where the first or second cruise control system (6, 7) can be selectively activated by means of controls (12, 15) which can be actuated by the driver so that simultaneous activation is possible, **characterised** in that the cruise control systems communicate between the systems via a communication link (16), and in that the second cruise control system comprises both means for detecting the active status and degree of adjustment of the first cruise control system, and means for comparing whether the degree of adjustment of the cruise control system exceeds a predetermined value stored in the system.

## Patentansprüche

1. Verfahren zum Konstanthalten der Geschwindigkeit eines Fahrzeugs, bei dem eine Motorsteuereinheit (6) zum Steuern des Antriebsmotors (1) des Fahrzeugs angeordnet ist, und bei dem eine Retardersteuereinheit (7) zum Steuern eines mit dem Antriebsstrang des Fahrzeugs verbundenen Retarders (5) angeordnet ist, bei dem die Motorsteuerung (6) und die Retardersteuerung (7) je eine Geschwindigkeitsregelfunktion aufweisen, die durch Regelung des Motors (1) bzw. des Retarders (5) anstreben, eine konstante Fahrzeuggeschwindigkeit aufrechtzuerhalten, wenn sie aktiviert sind,
dadurch gekennzeichnet, daß, wenn die Geschwindigkeitsregelfunktion der Retardersteuereinheit (7) aktiviert wird, während die Geschwindigkeitsregelfunktion der Motorsteuereinheit (6) vorher aktiviert worden war, ein Betriebsparameter des Fahrzeugs abgetastet und mit einem vorbestimmen Wert verglichen wird und auf der Basis des Vergleichs bestimmt wird, ob die Geschwindigkeitsregelfunktion der Motorsteuereinheit (6) abgestellt werden soll oder nicht.

2. Verfahren zum Aufrechterhalten einer konstanten Geschwindigkeit nach Anspruch 1,
dadurch gekennzeichnet, daß der abgetastete Betriebsparameter das Antriebsdrehmoment des Motors (1) darstellt, und daß die Geschwindigkeitsregelfunktion der Motorsteuereinheit in einer aktivierten Einstellung verbleibt, wenn der abgetastete Parameter unter die vorbestimmte Einstellung liegt.

3. Verfahren zum Aufrechterhalten einer konstanten Geschwindigkeit nach Anspruch 1,
dadurch gekennzeichnet, daß der abgetastete Betriebsparameter eine Geschwindigkeit darstellt.

4. Verfahren zum Aufrechterhalten einer konstanten Geschwindigkeit nach Anspruch 2,
dadurch gekennzeichnet, daß der vorbestimmte Wert ein Drehmoment darstellt, das dem vom Motor (1) während des Leerlaufs abgegebenen entspricht.

5. Verfahren nach Anspruch 1 zum Aktivieren zweier Geschwindigkeitsregelsysteme (6, 7), bei dem das erste Geschwindigkeitsregelsystem (6) dazu eingerichtet ist, durch Regeln der Gaseinstellung des Motors sicherzustellen, daß die Fahrzeuggeschwindigkeit nicht unter einen bestimmten Geschwindigkeits-Einstellwert fällt, und bei dem das zweite Geschwindigkeitsregelsystem (7) dazu eingerichtet ist, durch Einstellen der Bremswirkung einer Zusatzbremse (5) im Antriebsstrang des Fahrzeugs sicherzustellen, daß die Fahrzeuggeschwindigkeit einen bestimmten Geschwindigkeits-Einstellwert nicht übersteigt, bei dem das erste bzw. zweite Geschwindigkeitsregelsystem (6, 7) wahlweise aktiviert werden können, so daß eine gleichzeitige Aktivierung möglich ist,
dadurch gekennzeichnet, daß, wenn das zweite Geschwindigkeitsregelsystem (7) aktiviert ist, während das erste System (6) gleichzeitig aktiviert ist, das erste Geschwindigkeitsregelsystem (6) im aktiven Zustand gehalten wird, nur wenn sein Einstellgrad unter einen ersten vorbestimmten Wert liegt, und wenn das erste Geschwindigkeitsregelsystem (6) die Motorwirkung zu regeln beginnt, entsprechend einem Einstellgrad über einem zweiten vorbestimmten Wert, das zweite Geschwindigkeitsregelsystem (7) deaktiviert wird.

6. Fahrzeuggeschwindigkeits-Regelanordnung mit einer Motorsteuereinheit (6) zum Regeln des Antriebsmotors (1) des Fahrzeugs und einer Retardersteuereinheit (7) zum Regeln eines mit dem Antriebsstrang des Fahrzeugs verbundenen Retarders (5), bei dem die Motorsteuereinheit (6) und die Retardersteuereinheit (7) je eine Geschwindigkeitsregelfunktion aufweisen, die durch Regelung des Motors (1) bzw. des Retarders (5) anstreben, eine konstante Fahrzeuggeschwindigkeit aufrechtzuerhalten,
dadurch gekennzeichnet, daß die Motorsteuereinheit (6) und/oder die Retardersteuereinheit (7) dazu entworfen ist (sind), nur dann zu gestatten, daß die Geschwindigkeitsregelfunktion der Motorsteuereinheit (6) gleichzeitig mit der Geschwindigkeitsregelfunktion der Retardersteuereinheit (7) aktiviert wird, wenn die Motorsteuereinheit (6) den Motor (1) auf einen Pegel einstellt, der unter einem vorbestimmten Pegel liegt.

7. Fahrzeuggeschwindigkeits-Regelanordnung nach Anspruch 6,
dadurch gekennzeichnet, daß der vorbestimmte Pegel einen Pegel bildet, der ein vom Motor (1) abgegebenes Drehmoment darstellt.

8. Fahrzeuggeschwindigkeits-Regelanordnung nach Anspruch 6,
dadurch gekennzeichnet, daß der vorbestimmte Pegel einen eine Geschwindigkeit darstellenden Wert bildet.

9. Fahrzeuggeschwindigkeits-Regelanordnung nach Anspruch 7,
dadurch gekennzeichnet, daß der vorbestimmte Wert dem von dem Motor (1) während des Leerlaufs abgegebenen Drehmoment entspricht und/oder einem Drehmoment entspricht, das den Wert von 5 % des höchsten Drehmoments des Motors, das abgegeben werden kann, aufweist.

10. Anordnung nach Anspruch 6 zum Aktivieren zweier Geschwindigkeitsregelsysteme (6, 7) für Motorfahrzeuge, mit einem Antriebsmotor (1) zum Antreiben der Räder (3) des Fahrzeugs, zusammen mit Zusatzbremsen (5) zum Abbremsen der Räder des Fahrzeugs, bei der das erste Geschwindigkeitsregelsystem (6) dazu eingerichtet ist, durch Regeln der Gaseinstellung des Motors sicherzustellen, daß die Geschwindigkeit des Fahrzeugs nicht unter einen Geschwindigkeits-Einstellwert fällt, der vom Fahrer mittels einer Programmier-Steuereinrichtung (12) in einem Speicher (62) bestimmt wird, und bei dem das zweite Geschwindigkeitsregelsystem (7) dazu eingerichtet ist, durch Regeln der Bremswirkung der Zusatzbremsen (5) im Antriebsstrang des Fahrzeugs sicherzustellen, daß die Geschwindigkeit des Fahrzeugs nicht einen Geschwindigkeits-Einstellwert übersteigt, der vom Fahrer mittels einer Programmier-Steuereinrichtung (15) in einem Speicher (72) bestimmt wird, bei der das erste oder zweite Geschwindigkeitsregelsystem (6, 7) wahlweise durch Steuereinrichtungen (12, 15) aktiviert werden können, die vom Fahrer betätigt werden können, so daß gleichzeitige Aktivierung möglich ist,
dadurch gekennzeichnet, daß die Geschwindigkeitsregelsysteme untereinander über eine Kommunikationsverbindung (16) kommunizieren, und daß das zweite Geschwindigkeitsregelsystem eine Einrichtung zum Erkennen des aktiven Zustands und des Einstellgrades des ersten Geschwindigkeitsregelsystems und eine Einrichtung zum Vergleichen aufweist, ob der Einstellgrad des Geschwindigkeitsregelsystems einen im System gespeicherten vorbestimmten Wert übersteigt.

## Revendications

1. Procédé de maintien de la vitesse d'un véhicule à une valeur constante dans lequel une unité de commande de moteur (6) est prévue de manière à commander le moteur d'entraînement (1) du véhicule, et dans lequel une unité de commande de ralentisseur (7) est prévue pour commander un ralentisseur (5) relié à la transmission du véhicule, dans lequel l'unité de commande de moteur (6) et l'unité de commande de ralentisseur (7) incorporent chacune une fonction de commande de vitesse de croisière, qui, en régulant respectivement le moteur (1) et le ralentisseur (5), s'efforcent de maintenir une vitesse de véhicule à une valeur constante lorsqu'elles sont activées,
caractérisé en ce que, lorsque la fonction de commande de vitesse de croisière de l'unité de commande de ralentisseur (7) est activée, alors que la fonction de commande de vitesse de croisière de l'unité de commande de moteur (6) a été activée au préalable, un paramètre de fonctionnement du véhicule est mesuré et est comparé à une valeur prédéterminée, et il est déterminé, sur la base de la comparaison, si la fonction de commande de vitesse de croisière de l'unité de commande de moteur (6) doit être désactivée ou non.

2. Procédé de maintien d'une vitesse constante selon la revendication 1, caractérisé en ce que le paramètre de fonctionnement mesuré représente le couple d'entraînement du moteur (1), et en ce que la fonction de commande de vitesse de croisière de l'unité de commande de moteur reste dans une position activée si le paramètre mesuré est au-dessous de la valeur prédéterminée.

3. Procédé de maintien d'une vitesse constante selon la revendication 1, caractérisé en ce que le paramètre de fonctionnement mesuré représente une vitesse.

4. Procédé de maintien d'une vitesse constante selon la revendication 2, caractérisé en ce que la valeur prédéterminée représente un couple correspondant à celui qui est produit par le moteur (1) en fonctionnement à vide.

5. Procédé selon la revendication 1 pour l'activation de deux systèmes de commande de vitesse de croisière (6, 7), dans lequel le premier système de commande de vitesse de croisière (6) est conçu pour assurer, en commandant le papillon des gaz du moteur, que la vitesse du véhicule ne chute pas au-dessous d'une valeur de réglage de vitesse déterminée, et dans lequel le second système de commande de vitesse de croisière (7) est conçu pour assurer, en réglant l'effort de freinage d'un frein supplémentaire (5) dans la ligne de transmission du véhicule, que la vitesse du véhicule ne dépasse pas une valeur de réglage de vitesse déterminée, dans lequel les premier et second systèmes de commande de vitesse (6, 7) peuvent respectivement être activés de manière sélective de façon que l'activation simultanée soit possible,
caractérisé en ce que, lorsque le second système de commande de vitesse de croisière (7) est activé, alors que le premier système (6) est activé de manière simultanée, le premier système de commande de vitesse (6) est maintenu dans un état atcif seul si son niveau de réglage est au-dessous d'une première valeur prédéterminée, et lorsque le premier système de commande de vitesse de croisière (6) commence à commander l'effet moteur, correspondant à un niveau de réglage supérieur à une seconde valeur prédéterminée, le second système de commande de vitesse de croisière (7) est désactivé.

6. Dispositif de commande de vitesse de croisière de véhicule, comprenant une unité de commande de moteur (6) destiné à réguler le moteur d'entraînement (1) du véhicule, et une unité de commande de ralentisseur (7) destinée à réguler un ralentisseur (5) relié à la transmission du véhicule, dans lequel l'unité de commande de moteur (6) et l'unité de commande de ralentisseur (7) incorporent chacune une fonction de commande de vitesse de croisière qui, en commandant respectivement le moteur (1) et le ralentisseur (5), s'efforce de maintenir constante une vitesse de véhicule, caractérisé en ce que l'unité de commande de moteur (6) et/ou de l'unité de commande de ralentisseur (7) est (sont) conçue(s) pour permettre l'activation simultanée de la fonction de commande de vitesse de croisière de l'unité de commande de moteur (6) et la fonction de commande de vitesse de croisière de l'unité de commande de ralentisseur (7) seulement lorsque l'unité de commande de moteur (6) règle le fonctionnement du moteur (1) à un niveau qui se trouve au-dessous d'un niveau prédéterminé.

7. Dispositif de commande de vitesse de croisière de véhicule selon la revendication 6, caractérisé en ce que le niveau prédéterminé constitue un niveau représentant un couple produit par le moteur (1).

8. Dispositif de commande de vitesse de croisière de véhicule selon la revendication 6, caractérisé en ce que le niveau prédéterminé constitue une valeur représentant une vitesse.

9. Dispositif de commande de vitesse de croisière de véhicule selon la revendication 7, caractérisé en ce que la valeur prédéterminée correspond au couple que le moteur (1) produit en fonctionnement à vide et/ou correspond à un couple équivalent de 5 pourcent du couple maximum pouvant être produit par le moteur.

10. Dispositif selon la revendication 6 pour l'activation de deux systèmes de commande de vitesse de croisière (6, 7) pour véhicules à moteur, comprenant un moteur d'entraînement (1) destiné à entraîner les roues (3) du véhicule, ainsi que des freins supplémentaires (5) destinés au freinage des roues du véhicule, dans lequel le premier système de commande de vitesse de croisière (6) est conçu pour assurer, en commandant le papillon des gaz du moteur, que la vitesse du véhicule ne chute pas au-dessous d'une valeur de réglage déterminée par le conducteur à l'aide d'une commande de programmation (12) dans une mémoire (62), et dans lequel le second système de commande de vitesse de croisière (7) est conçu pour assurer, en commandant l'effort de freinage des freins supplémentaires (5) dans la ligne de transmission du véhicule, que la vitesse du véhicule ne dépasse pas une valeur de réglage déterminée par le conducteur à l'aide d'une commande de programmation (15) dans une mémoire (72), dans lequel les premier et second systèmes de commande de vitesse de croisière (6, 7) peuvent être activés de manière sélective à l'aide de dispositifs de commande (12, 15) qui peuvent être actionnés par le conducteur de façon que l'activation simultanée soit possible, caractérisé en ce que les systèmes de commande de vitesse de croisière communiquent entre les systèmes par l'intermédiaire d'une liaison de communication (16), et en ce que le second système de commande de vitesse de croisière comprend à la fois des moyens destinés à détecter l'état actif et le niveau de réglage du premier système de commande de vitesse de croisière, et un moyen de comparaison destiné à vérifier si le niveau de réglage du système de commande de vitesse de croisière dépasse une valeur prédéterminée mémorisée dans le système.
